# EUROPEAN PATENT SPECIFICATION

(11) **EP 0 813 318 B1**
(45) Date of publication and mention of the grant of the patent: **02.11.2006**
(21) Application number: 97304057.9
(22) Date of filing: 11.06.1997
(51) Int. Cl.: H04B 7/26

(54) **Point to multipoint two-way communications system with frequency selection for base station**
Punkt zur Mehrpunktzweiwegübertragungsanordnung mit Frequenzwahl für Basisstation
Système de communication à deux sens point vers multipoints avec sélection de fréquence pour la station de base

(30) Priority: 11.06.1996 GB 9612195
(43) Date of publication of application: 17.12.1997
(73) Proprietor: Plextek Limited, Great Chesterford, Essex CB10 1NY (GB)
(72) Inventor: Smithers, Colin Richard, Bishop's Stortford, Herts CM23 2HX (GB)
(74) Representative: Harrison, Paul Richard

(56) References cited:
- EP-A- 0 550 146
- EP-A- 0 670 558
- WO-A-97/45962
- CH-A- 672 702
- FR-A- 2 726 147

## Description

### Field of the Invention

This invention relates to the field of digital communications system.

### Background to the Invention

National administration across the world allocate the usable radio frequency spectrum by splitting it into channels of fixed bandwidth. In Europe at VHF and UHF these allocated channels are typically 12.5kHz wide. A system which operates within allocated channels is described in CH 672 702. A modulated backscatter wireless communication system having an extended range is described in EP0670558.

Data is normally sent across these channels in a serial manner, each transmission using the whole channel. The desired data rate and the nominal tolerance of easily-producible frequency references (in the region of 10 parts per million) mean that such systems normally resolve the data over a relatively wide bandwith (for example 7.5kHz) which is a large proportion of the allocated channel bandwith (12.5kHz).

The fundamental sensitivity of such systems is limited by these bandwidths, the noise figure of the receiver and also any extraneous noise (natural or man-made) present at the receiver.

Many communications systems are limited by relatively lower power availability. For example, telemetry applications such as the monitoring of gas meters are power-restricted in that, firstly the remote gas meters have no integral power sources of their own (therefore power must be supplied to them) and, secondly, safety regulations restrict the amount of power that is supplied in the vicinity of the potentially-dangerous gas supply.

For maximum communications range at low power, it is necessary to operate at a low bandwidth. (This reduces the speed at which information can be transmitted, but for many applications, this reduction is acceptable). Consequently this requires that narrow band filtering is employed, with the wanted signals arriving in this narrow band. In order to achieve this, both the transmitter and receiver must operate with high frequency accuracy else the wanted signal will not be detected by the receiver.

This is a significant problem in communications systems (for example vehicle tracking systems) where there is a need for low cost transmitter units. The high accuracy components required would make the costs prohibitively high.

In our co-pending UK patent application entitled "DIGITAL COMMUNICATIONS" and filed on 31 May 1996, there is provided a digital communications system which seeks to increase the range of a transmitter without increasing its size or cost.

This is achieved by improving the sensitivity of the receiver (ie, enabling it to receive signals at a low signal strength) by implementing said receiver as a bank of narrow filters. Each filter is, effectively, an independent receiver listening to a part of the overall (12.5kHz) channel. As such, noise power in each filter is reduced and sensitivity therefore increased.

In many applications, more sophisticated communication procedures could be employed if two-way point to multipoint communication were possible. However, although the sensitivity of the receiver at the base station (the "point") is improved using the above method, the same method would need to be employed in every individual outstation (the "multipoints"), again making the costs prohibitively high. Furthermore, there is a problem when considering a transmission from the base site to be received at an outstation because of the disparity in power available between the base station and each outstation, if path of equal range performance is required. As described above, range can be extended by reducing the bandwidth and this is achieved in the base station by the bank of narrow filters. However, for two-way communication where each path needs to operate at a similar budget of power and range, the outstation receiver must also be of narrow bandwidth. The low tolerance of the frequency reference in the desired low-cost multiple outstations is thus a problem again.

It is therefore an object of the present invention to provide a communications system optimised for low cost, power-efficient two-way communications with maximised range between a single base site and a multiplicity of low-cost outstations.

### Summary of the Invention

According to the present invention in its broadest aspect there is provided a point to multipoint two-way communications system including a base station and a remote station, the system being characterised in accordance with claim 1 hereinbelow.

Preferably, the system comprises a base station transceiver having a transmitter for transmitting a modulated data signal and a receiver having means for dividing a received channel into a plurality of narrow frequency bands; means for detecting the presence of data signals in individual ones of said narrow frequency bands; and demodulation means for demodulating the data signals, the demodulation means including at least one narrow band filter centred on the detected data signal frequency bands; at least one outstation transceiver having a transmitter for transmitting a modulated data signal and a receiver having at least one channel-defining filter,
wherein, in use, said base station transmits to said outstation on a frequency derived by the base station from the frequency of a transmission previously-received by said base station from said outstation.

In a preferred form, said division, said detection and said demodulation are performed digitally in a digital signal processor.

Preferably, said outstation is normally de-activated to reduce power consumption and is activated in order to receive transmissions from said base station after a pre-determined timed delay relative to a previous transmission event.

In a preferred form, the receiver at said outstation transceiver is of the superheterodyne type with a single channel-defining filter.

Alternatively, said outstation receiver is implemented using a pair of filters as the channel-defining filters. In a preferred form, the filters are located at the outputs of a dual direct conversion receiver, said receiver incorporating single-side band selection by a phasing method.

According to a second aspect of the invention there is provided a method of transmitting and receiving digital data, the method comprising the steps of claim 8 hereinbelow.

It will be understood that the invention includes within its scope a two-way communication system substantially as described herein with reference to and as illustrated by the accompanying drawings.

### Brief Description of the Drawings

In the accompanying drawings:
Figure 1 is a block diagram of the outstation transceiver;
Figure 2 is a block diagram of the base station transceiver;
Figure 3 is a block diagram of an alternative embodiment of the outstation receiver; and
Figure 4 is a diagram representing the frequency relationships of the receiver of Figure 3.

### Description of the Preferred Embodiment

The radio communications system of the present invention comprises two types of transceiver or station. The base station 1 can be considered as the "point" of the point to multipoint communications system. A plurality of remote transceivers or outstations 2 are also provided; their number depending upon the particular application.

It is conceivable that there could also be more than one base station 1, and/or only one outstation 2, but for the purposes of this example, a system comprising a single base station 1 and a plurality of outstations 2 will be described.

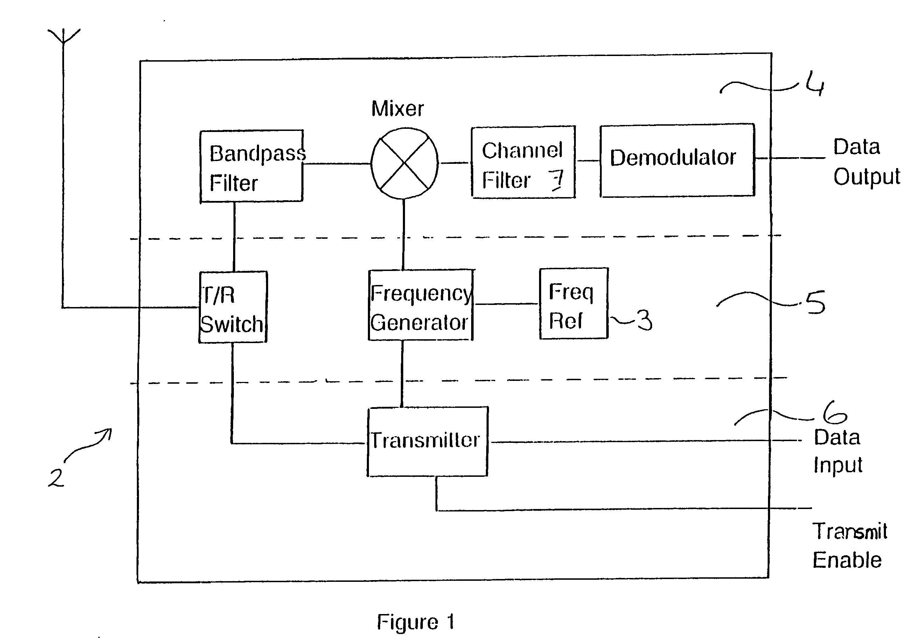

The principal requirement of each outstation 2 is that it should provide maximum range performance for minimum cost and power consumption. Referring specifically to Figure 1, outstation 2 has a frequency reference 3 which is common to both the transmitting and receiving elements of the outstation. The tolerance requirements of frequency reference 3 are not excessively high. The total of the cutting, temperature and ageing tolerances need only be such that the transmission does not go outside the allocated frequency channel width (in the UK this is typically 12.5kHz).

The uplink and downlink nominal frequencies do not need necessarily to be the same, however the relationship between them needs to be known. This may be fixed or may change with time according to an algorithm known to each end of the link (ie, both base station 1 and outstation 2).

Outstation 2 comprises a receiver 4, common elements 5 and a transmitter 6. Receiver 4 is a superheterodyne ("superhet") receiver having a single channel-defining filter 7.

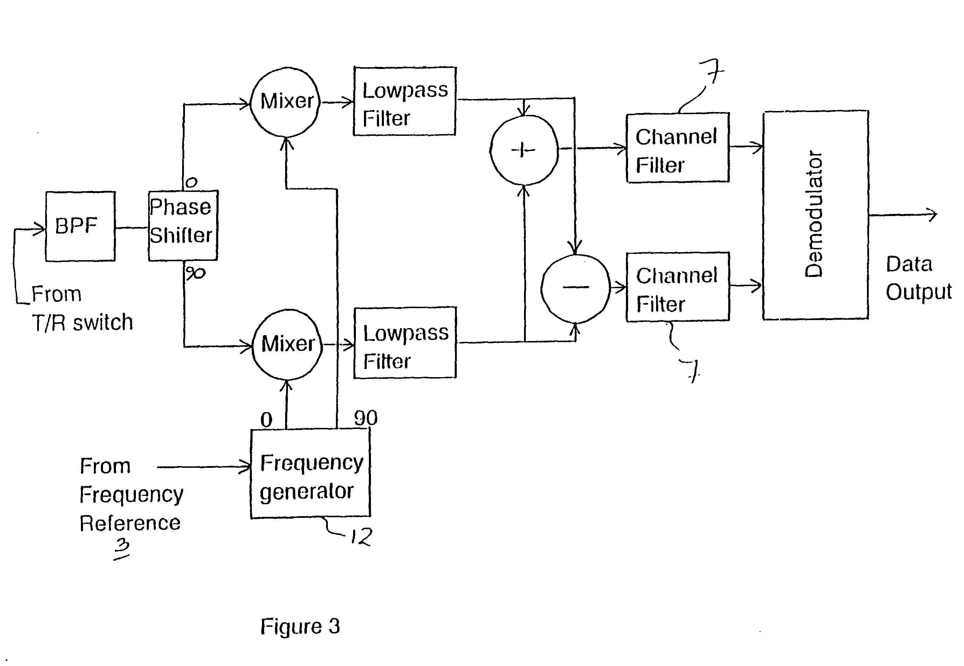

An alternative embodiment of the outstation receiver 4 is shown in Figure 3 where a pair of filters are used as the channel defining filters 7. This is particularly suited to modulation of the base station transmission using directly-modulated frequency shift keying ("FSK") where the signal energy is substantially contained on two discrete frequencies within the channel. The filters would be placed at the outputs of a dual direct conversion receiver, said receiver incorporating single-sideband selection by the phasing method. This is known as an independent sideband (ISB) receiver. In use, the receiver input frequency becomes a pair of frequencies separated by twice the value of the centre frequency of channel filter 7.

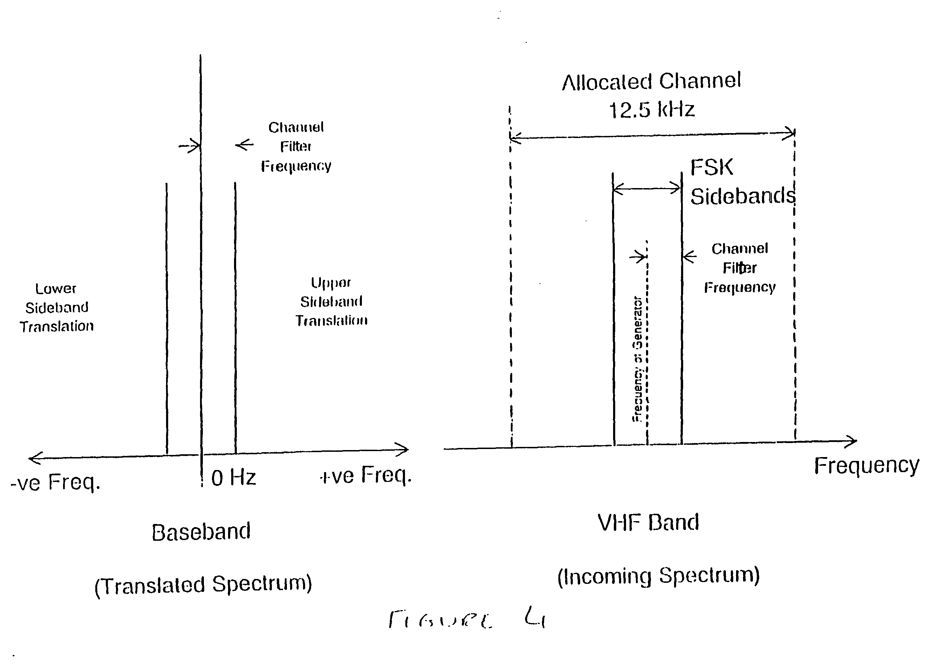

In this method, signals arriving in the channel but higher in frequency than frequency generator 12 (the upper sideband) will arrive substantially at one output, and those at a lower frequency than that of frequency generator 12 (the lower sideband) will arrive substantially at the other output. When receiving a direct FSK signal then, each channel filter will contain only mark or space energy respectively. Figure 4 is a diagram of the frequency relationships described here.

The outstation receiver 4 demodulates signals falling within its channel defining filter 7. In order to maximise link budget (and therefore range), channel defining filter 7 needs to be significantly narrower than the allocated channel. However, owing to the errors between the frequency reference 3 of the outstation 2 and the frequency reference of base station 1, base station 1 is not necessarily able to transmit a signal within the passband of receiver 4's channel defining filter 7.

In order to solve this problem, base station 1 needs to be able to determine the frequency of the outstation's transmission to a resolution which is as fine or finer than the bandwidth of the outstation's receiver channel defining filter 7. Once base station 1 has received a preliminary transmission from an outstation 2, the frequency of that transmission is known and hence the frequency reference 3 of that outstation can be determined. Once this is known, base station 1 can transmit to outstation 2 at will. Hence base station 1 can transmit to outstation 2 at the frequency of its receiver 4, even though the effective bandwidth of receiver 4 is very much narrower than the allocated channel.

The power consumption of each outstation 2 can be minimised if transmissions from base station 1 are only sent to individual outstations 2 at known times. Each outstation receiver 4 can then be de-activated at all other times. This is achieved by having receiver 4 only looking for a base station transmission at an appointed time relative to a previous transmission. Similarly, base station 1 only transmits signals at that appointed time. The base station 1, knowing when the last transmission was sent and on exactly which frequency, can establish precisely when to transmit to the appointed outstation 2. Errors in time accuracy can be engineered to match the errors in frequency reference, thus permitting accurate time predictions and consequently saving power.

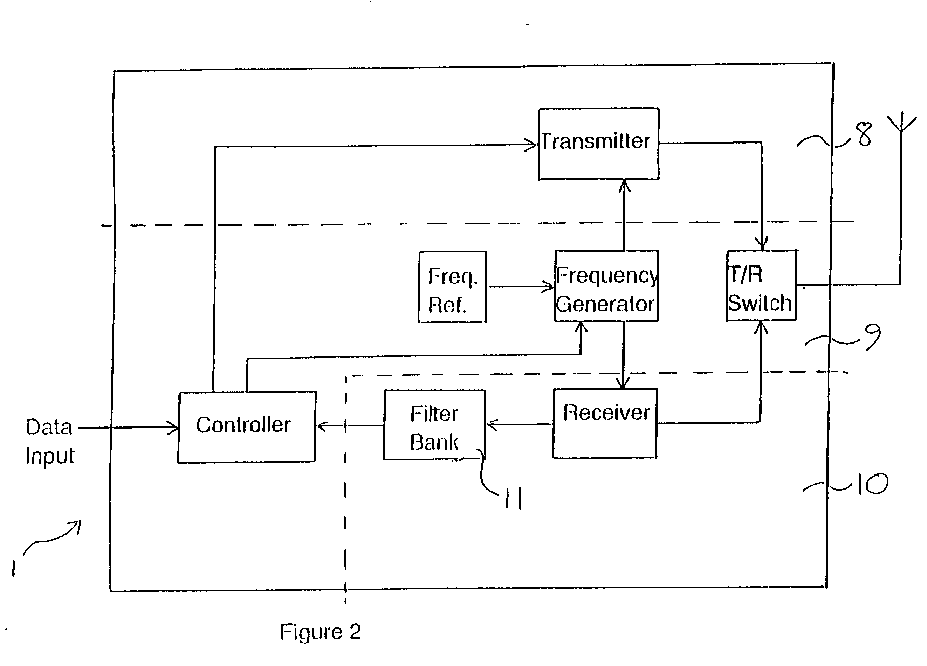

Turning now to Figure 2, base station 1 comprises a transmitter 8, common elements 9 and a receiver 10. Receiver 10 is implemented using a bank of filters 11, each narrower than the allocated channel. These may be achieved as individual filters or by signal processing means.

The output of filter bank 11 needs to be processed to establish the identity and the frequency of the incoming signal. The frequency of the incoming signal can be determined by either
1. identifying in which element of filter bank 11 the incoming signal is being detected; or
2. using the above only to identify the incoming signal and then subsequently employing an agile filter with its own frequency counting means to pin-point the frequency of the detected signal.

The identity of the received signal is then obtained by demodulation.

Having identified the frequency of an incoming signal from outstation 2 and noting the time, base station 1 is then in possession of the necessary information to subsequently transmit back to the outstation 2. This can even compensate for accumulated time errors, as the outstation's clock errors will also be known if they have been derived from the same frequency reference 3.

After synchronisation, the most significant errors which are likely to arise in the outstation frequency reference 3 will be as a resuit of temperature drift. It is possible, however, for outstation 2 to know what temperature environment it is in and therefore to calculate whether it may need to re-synchronise with base station 1.

The timing of re-synchronisation of outstation 2 with base station 1 needs to be determined for each individual implemented system. For example, the need to re-synchronise increases if base station 1 is also constructed using a poor tolerance frequency reference, or if the ratio of channel width to outstation filter receiver width is very high. Another need for regular re-synchronisation would occur if the outstation bandwidth as a proportion of centre frequency is very small (substantially less than 1 part per million).

Further enhancements could be made to the system if outstation 2, once synchronised with base station 1 and communications established, was informed of its own absolute frequency. It could then use this to correct subsequent errors. Following on from this, outstation 2 could maintain synchronisation with base station 1 by listening for a regular synchronisation broadcast from base station 1 (this is particularly suited to systems having a plurality of outstations 2). In the event of this synchronisation broadcast not being heard, (either owing to frequency drift of either station or owing to interference) the outstation 2 could automatically re-synchronise. The period of the synchronisation broadcasts could still be engineered to obtain great power savings over a system where the outstation has to receive on a continuous basis.

The system is not particularly sensitive to the modulation method used for transmissions. Amplitude, frequency or phase methods could be used provided that most of the signal energy passes through the narrow filter described above. If methods where energy is principally distributed on several discrete frequencies are used, filter bank techniques can take advantage of this to add diversity and avoid interference.

In a preferred embodiment said base station is able to substantially simultaneously transmit to more than one of said outstations and, similarly, is able to receive signals from more than one outstation substantially simultaneously so long as those signals are transmitted (by the outstations) at frequencies sufficiently different for the signals to be individually resolved.

Furthermore, in a full duplex system, said base station is able to transmit to one or more outstations at substantially the same time as receiving a signal or signals from other outstations, so long as the respective frequencies are different from one another.

If the system were operated on two frequencies as a duplex system, the implementation may use multiple frequency generators; it may be that the base station 1 is transmitting continuously. However, the use of a common or linked frequency reference would be necessary.

Many applications for the communications system of the present invention are envisaged, for example:
- Security devices for objects or personnel, for status or location-tracking purposes (e.g prisoner tagging, automatic vehicle location);
- Telemetry devices, for example utilities metering;
- Status monitoring of plant or storage systems;
- Remote interrogation of sensors, for example for weather or environmental monitoring;
- Wireless alarm systems, for example security (e.g intruder) or safety (e.g. fire) applications.

## Claims

1. A point to multipoint two-way communications system including a base station (1) and a remote station (2), the base station (1) comprising a transmitter for transmitting to the remote station (2) and a receiver having means for dividing a received channel into a plurality of narrow frequency bands and a controller connected to the channel dividing means for establishing the frequency of the signal received from the remote station, said base station being adapted to transmit at a frequency being the same as, or in a fixed relationship to, said established remote station frequency.

2. A communications system as claimed in claim 1, **characterised in that** it comprises:
a base station transceiver having a transmitter (8) for transmitting a modulated data signal and a receiver (10) having means for detecting the presence of data signals in individual ones of said narrow frequency bands; and, demodulation means for demodulating the data signals, the demodulation means including at least one narrow band filter centred on the detected data signal frequency bands; and
at least one outstation transceiver having a transmitter (6) for transmitting a modulated data signal and a receiver (4) having at least one channel-defining filter (7),
wherein, in use, said base station transmits to said outstation on a frequency derived by the base station from the frequency of a transmission previously received by said base station from said outstation.

3. A communications system as claimed in Claim 2, **characterised in that** said division, said detection and said demodulation are performed digitally in a digital signal processor.

4. A communications system as claimed in any of the preceding claims, **characterised in that** said outstation is normally de-activated to reduce power consumption and is activated in order to receive transmissions from said base station after a pre-determined timed delay relative to a previous transmission event.

5. A communications system as claimed in any of Claims 2 to 4, **characterised in that** the receiver at said outstation transceiver is of the superheterodyne type with a single channel-defining filter (7).

6. A communications system as claimed in any of Claims 2 to 4, **characterised in that** said outstation receiver is implemented using a pair of filters (7) as the channel-defining filters.

7. A communications system as claimed in Claim 6, **characterised in that** the filters are located at the outputs of a dual direct conversion receiver, said receiver incorporating single-side band selection by a phasing method.

8. A point to multipoint two-way communications method comprising the steps of:
a. transmitting a digitally modulated data signal from a remote station;
b. receiving said modulated data signal at a base station;
c. dividing a channel having said received signal into a plurality of narrow frequency bands;
d. establishing the frequency of the received signal using the output of the dividing step;
e. transmitting a signal from the base station at a frequency being the same as, or in a fixed relationship to said established remote station frequency.

## Patentansprüche

1. Punkt-zu-Mehrpunkt-Zweiwegkommunikationssystem, das eine Basisstation (1) und eine abgesetzte Station (2) aufweist, wobei die Basisstation (1) einen Sender zum Senden an die abgesetzte Station (2) und einen Empfänger mit Mitteln zum Teilen eines Empfangskanals in eine Mehrzahl von schmalen Frequenzbändern und ein Steuergerät umfasst, das mit dem Kanalteilungsmittel zum Aufbauen der Frequenz des von der abgesetzten Station empfangenen Signals verbunden ist, wobei besagte Basisstation adaptiert wird mit einer Frequenz zu senden, die gleich der in der abgesetzten Station aufgebauten Frequenz ist oder in einer festen Beziehung zu dieser steht.

2. Kommunikationssystem nach Anspruch 1, **dadurch gekennzeichnet**, das es umfasst:
einen Basisstations-Transceiver mit einem Sender (8) zum Senden eines modulierten Datensignals und einen Empfänger (10) mit Mitteln zum Erfassen der Anwesenheit von Datensignalen in individuellen Bändern besagter schmalen Frequenzbänder; und, Demodulationsmittel zum Demodulieren der Datensignale, wobei die Demodulationsmittel mindestens ein Schmalbandfilter aufweisen, das auf die erfassten Datensignalfrequenzbänder zentriert ist; und
mindestens einen Außenstations-Transceiver mit einem Sender (6) zum Senden eines modulierten Datensignals und einen Empfänger (4) mit mindestens einem Kanal-Definitionsfilter (7),
wobei besagte Basisstation, wenn in Gebrauch, an besagte Außenstation auf einer Frequenz sendet, die von der Basisstation aus der Frequenz einer Übertragung abgeleitet ist, die vorher durch besagte Basisstation von besagter Außenstation empfangen wurde.

3. Kommunikationssystem nach Anspruch 2, **dadurch gekennzeichnet, dass** besagte Teilung, besagte Erfassung und besagte Demodulation digital in einem digitalen Signalprozessor durchgeführt werden.

4. Kommunikationssystem nach einem beliebigen der vorherigen Ansprüche, **dadurch gekennzeichnet, dass** besagte Außenstation normalerweise deaktiviert ist, um Stromverbrauch zu reduzieren und aktiviert wird, um Übertragungen von besagter Basisstation nach einer vorbestimmten Zeitverzögerung, relativ zu einem vorherigen Übertragungsereignis, zu empfangen.

5. Kommunikationssystem nach einem beliebigen der Ansprüche 2 bis 4, **dadurch gekennzeichnet, dass** der Empfänger an besagtem Außenstations-Transceiver des Überlagerungstyps mit einem einzelnen Kanal-Definationsfilter (7) ist.

6. Kommunikationssystem nach einem beliebigen der Ansprüche 2 bis 4, **dadurch gekennzeichnet, dass** besagter Außenstationsempfänger unter Verwendung eines Filterpaars (7) als Kanal-Definationsfilter implementiert wird.

7. Kommunikationssystem nach Anspruch 6, **dadurch gekennzeichnet, dass** die Filter an den Ausgängen eines direkten Doppelüberlagerungsempfängers positioniert sind, wobei in besagten Empfänger Einseitenbandwahl durch ein Phaseneinstellungsverfahren eingebaut ist.

8. Punkt-zu-Mehrpunkt-Zweiwegkommunikationsverfahren, das folgende Schritte umfasst:
a. Senden eines digital modulierten Datensignals von einer abgesetzten Station;
b. Empfangen besagten modulierten Datensignals in einer Basisstation;
c. Teilen eines Kanals, der besagtes Empfangssignal aufweist, in eine Mehrzahl von schmalen Frequenzbändern;
d. Aufbauen der Frequenz des Empfangssignals unter Verwendung der Ausgangsgröße des Teilungsschritts;
e. Senden eines Signals von der Basisstation mit einer Frequenz, die gleich der in der abgesetzten Station aufgebauten Frequenz ist oder in einer festen Beziehung zu dieser steht.

## Revendications

1. Un système de communications bidirectionnelles point à multipoint comportant une station de base (1) et une station asservie (2), la station de base (1) comprenant un émetteur pour transmettre à la station asservie (2) et un récepteur ayant un moyen pour diviser un canal reçu en une pluralité de bandes de fréquences étroites et un contrôleur connecté au moyen de division de canal pour établir la fréquence du signal reçu de la station asservie, ladite station de base étant adaptée pour transmettre à une fréquence étant la même que, ou dans un rapport fixe relativement à, la dite fréquence de station asservie établie.

2. Un système de communications comme revendiqué dans la revendication 1, **caractérisé en ce qu'**il comprend :
un émetteur-récepteur de station de base ayant un émetteur (8) pour transmettre un signal de données modulées et un récepteur (10) ayant un moyen pour détecter la présence de signaux de données dans les bandes individuelles desdites bandes de fréquences étroites ; et un moyen de démodulation pour démoduler les signaux de données, le moyen de démodulation comportant au moins un filtre à bande étroite centré sur les bandes de fréquences de signaux de données détectées ; et
au moins un émetteur-récepteur de poste extérieur ayant un émetteur (6) pour transmettre un signal de données modulées et un récepteur (4) ayant au moins un filtre de définition de canal (7).
dans quoi, lors de l'utilisation, ladite station de base transmet audit poste extérieur sur une fréquence dérivée par la station de base de la fréquence d'une transmission précédemment reçue par ladite station de base dudit poste extérieur.

3. Un système de communications comme revendiqué dans la revendication 2, **caractérisé en ce que** ladite division, ladite détection et ladite démodulation sont réalisées numériquement dans un processeur de signaux numérique.

4. Un système de communications comme revendiqué dans l'une quelconque des revendications précédentes, **caractérisé en ce que** ledit poste extérieur est normalement désactivé pour réduire la consommation de puissance et est activé afin de recevoir les transmissions de ladite station de base après une temporisation prédéterminée relativement à un événement de transmission précédent.

5. Un système de communications comme revendiqué dans l'une quelconque des revendications 2 à 4, **caractérisé en ce que** le récepteur audit émetteur-récepteur de poste extérieur est du type à superhétérodyne avec un seul filtre de définition de canal (7).

6. Un système de communications comme revendiqué dans l'une quelconque des revendications 2 à 4, **caractérisé en ce que** ledit récepteur de poste extérieur est mis en oeuvre en utilisant une paire de filtres (7) comme les filtres de définition de canal.

7. Un système de communications comme revendiqué dans la revendication 6, **caractérisé en ce que** les filtres sont situés aux sorties d'un récepteur à double changement de fréquence directe, ledit récepteur incorporant une sélection à bande latérale unique grâce à une méthode de mise en phase.

8. Une méthode de communications bidirectionnelles point à multipoint comprenant les étapes suivantes :
a. la transmission d'un signal de données numériquement modulées à partir d'une station asservie ;
b. la réception dudit signal de données modulées à une station de base ;
c. la division d'un canal ayant ledit signal reçu en une pluralité de bandes de fréquences étroites ;
d. l'établissement de la fréquence du signal reçu à l'aide de la sortie de l'étape de division ;
e. la transmission d'un signal de la station de base à une fréquence étant la même que, ou dans un rapport fixe relativement à, ladite fréquence de station asservie établie.
